# EUROPÄISCHE PATENTSCHRIFT

(11) **EP 0 962 280 B1**
(45) Veröffentlichungstag und Bekanntmachung des Hinweises auf die Patenterteilung: **02.05.2003**
(21) Anmeldenummer: 99101990.2
(22) Anmeldetag: 01.02.1999
(51) Int. Cl.: B23Q 3/18

(54) **Ausrichteinrichtung**
Alignment device
Dispositif d'alignement

(30) Priorität: 03.06.1998 DE 19824692
(43) Veröffentlichungstag der Anmeldung: 08.12.1999
(73) Patentinhaber: Sauter Feinmechanik GmbH, D-72555 Metzingen (DE)
(72) Erfinder: Sahm, Detlef Dieter, Dr.-Ing., 73669 Lichtenwald (DE); Wezel, Rolf, 72555 Metzingen (DE)
(74) Vertreter: Patentanwälte Bartels und Partner

(56) Entgegenhaltungen:
- EP-A- 0 416 610
- EP-A- 0 780 179
- DE-A- 3 318 603
- US-A- 4 836 725

## Beschreibung

Die Erfindung betrifft eine Ausrichteinrichtung für die relative Lageeinstellung eines Werkzeughalters gegenüber einer Werkzeughalteraufnahme bei Werkzeugmaschinen in Form einer Schwenkbewegung mit einem Ausrichtteil, das mit einem Einstellteil zusammenwirkt.

Werkzeughalter, wie Spindelköpfe, mit antreibbaren Bearbeitungswerkzeugen werden in sog. Revolvern von Drehmaschinen eingebaut, um beispielsweise eine außermittige Bearbeitung von Drehteilen auf einer Drehmaschine als Werkzeugmaschine zu ermöglichen. Die Schnittstelle zwischen den Spindelköpfen und der Werkzeugscheibe des Werkzeugrevolvers ist dabei festgelegt durch DIN 69880-11 (Ausgabe September 94, Seite 305ff). Bei solchen Spindelköpfen, bei denen die Werkzeugachse des antreibbaren Schneidwerkzeuges identisch mit der Mittelachse der Aufnahmebohrung gemäß der vorstehend genannten DIN-Norm ist, die parallel zur Z-Achse der Drehmaschine ausgerichtet ist, ist eine Ausrichtung für das Schneidwerkzeug nicht notwendig. Eine Ausrichtung ist jedoch notwendig bei Spindelköpfen, bei denen die Werkzeugachse nicht identisch mit der Mittelachse der Aufnahmebohrung nach der angesprochenen DIN-Norm ist. In diesen Fällen muß für eine genaue Bearbeitung die Werkzeugspitze erst auf die Z-Achse der Werkzeugmaschine, insbesondere der Drehmaschine, ausgerichtet werden, was auch für den Fall gilt, daß beim sog. Gegenspindeldrehen die Mittelachsen der Aufnahmebohrungen sternförmig an der Werkzeugscheibe des Werkzeugrevolvers angeordnet sind, wodurch die Innenbearbeitungswerkzeuge erst parallel zur Drehachse der Drehmaschine auszurichten sind.

Mit Hilfe der Aufnahmebohrung nach der genannten DIN-Norm kann ein Werkzeughalter, beispielsweise in Form eines Spindelkopfes, zentriert werden, und zwar in einer Achsrichtung, nicht aber zu einer hierzu senkrecht verlaufenden weiteren Achse. Es sind daher schon unterschiedliche Ausrichteinrichtungen vorgeschlagen worden. Bei einer Art einer bekannten Ausrichteinrichtung nach der DE 39 29 802 C1 (EP-A-0416610), die den nächstkommenden Stand der Technik gemäss dem Oberbegriff des Anspruchs 1 beschreibt, weist der Werkzeughalter zwei einander diametral gegenüberliegende Einstellschrauben als Einstellteile auf, die gemeinsam auf ein Ausrichtteil einwirken, das an der Werkzeughalteraufnahme für den Werkzeughalter angeordnet ist. Diese Lösung hat den Nachteil, daß jeder Werkzeughalter bei jedem Einsetzen in die zugeordnete Werkzeughalteraufnahme mittels der Einstelloder Justierschrauben in der eingesetzten Stellung zu justieren ist, da sich bei mehrfachem Herausnehmen und Einsetzen des Werkzeughalters Veränderungen an der Ausrichteinrichtung ergeben, die zu Ungenauigkeiten führen. Auch ist der Ausrichtvorgang mittels zweier, getrennt voneinander angeordneter Einstellschrauben von der Handhabung nicht gerade einfach und entsprechend zeitaufwendig.

Zur Beseitigung der Nachteile dieses Standes der Technik ist in der DE 195 48 151 A1 zwar bereits vorgeschlagen worden, als Ausrichteinrichtung sowohl am Werkzeughalter als auch an der Werkzeughalteraufnahme jeweils zugeordnete Ausrichtteile vorzusehen, die bei ihrer Verbindung miteinander als Formschlußelemente spielfrei ineinandergreifen; allein das paßgenaue und spielfreie Ineinandergreifen erfordert einen hohen Bearbeitungsaufwand beim Herstellen der bekannten Ausrichteinrichtung, so daß diese Lösung sehr teuer ausfällt.

Durch die DE 31 50 355 C2 ist ein Werkzeughaltereinsatz bekannt, insbesondere für Bohrstangen mit einem schaftförmigen Werkzeughalter für einen Schneideinsatz, mit einer auf ein Außengewinde des Werkzeughalters aufgeschraubten Einstellhülse, die mit einem Flansch an der einen Seite eines ortsfesten Bundringes anliegt und mit einem auf die Einstellhülse aufgesetzten Federring, der sich einerseits an der anderen Seite des Bundringes und andererseits an einem bundförmigen Anschlag der Einstellhülse abstützt. Durch den Federring wird eine axiale Spielfreiheit zwischen den Bauteilen erzielt. Mit dieser bekannten axialen Zustelleinrichtung läßt sich eine relative Lageeinstellung in Form einer Schwenkbewegung für Werkzeughalter nicht erreichen. Ferner baut die bekannte Anordnung kompliziert auf und ist aufgrund der Teilevielzahl teuer in der Herstellung. Ferner ist die Handhabung schwierig.

Ausgehend von diesem Stand der Technik liegt der Erfindung die Aufgabe zugrunde, eine Ausrichteinrichtung zu schaffen, die konstruktiv einfach aufbaut und mithin preiswert ist und dennoch in hohem Maße einfach und funktionssicher die gewünschte Ausrichtung ermöglicht. Eine dahingehende Aufgabe löst eine Ausrichteinrichtung mit den Merkmalen des Anspruchs 1.

Dadurch, daß gemäß dem kennzeichnenden Teil des Anspruchs 1 das Einstellteil mit einem Aufnahmegehäuse versehen ist, in dem entgegen der Wirkung eines Kraftspeichers längsverschiebbar ein Führungsteil für das Ausrichtteil geführt ist und wobei das Führungsteil über ein Betätigungsteil ansteuerbar ist, läßt sich mit wenigen konstruktiv einfach aufbauenden Baukomponenten eine funktionssichere Ausrichteinrichtung verwirklichen, wobei auf hochgenaue, kostenintensive Passungen zwischen dem Ausrichtteil und dem Einstellteil verzichtet werden kann. Ferner kann über ein einzelnes Betätigungsteil wirksam der Einstell- und Ausrichtvorgang vorgenommen werden, was die Handhabung der Ausrichteinrichtung, insbesondere im späteren Betrieb an den Bearbeitungsmaschinen, deutlich erleichtert.

Mit der erfindungsgemäßen Ausrichteinrichtung kann im selben Betätigungssinne und in derselben Betätigungsrichtung die Schwenkeinstellbewegung für die relative Lageeinstellung zwischen Werkzeughalter und Werkzeughalteraufnahme durchgeführt werden, so daß eine genaue sinnfällige Ausrichtung der Antriebsachse mit den Werkzeugmaschinengrundachsen, beispielsweise der Z-Achse, möglich ist.

Bei einer bevorzugten Ausführungsform der erfindungsgemäßen Ausrichteinrichtung sind das Ausrichtteil fest an der Werkzeughalteraufnahme und das Einstellteil fest an dem Werkzeughalter angeordnet. Ferner ist vorzugsweise vorgesehen, daß das Einstellteil als Kulissenstein ausgebildet ist, der eine Eingriffsstelle für das Ausrichtteil aufweist. Somit kann der Kulissenstein zusammen mit dem Ausrichtteil eine stationäre Lage einnehmen und das Einstellteil mit dem Aufnahmegehäuse bewegt sich zusammen mit dem Werkzeughalter um die dahingehende stationäre Baugruppe. Konstruktive Grundmaschinenbauteile, wie federbelastete, in Gehäusen geführte Kulissensteine vorzusehen, ist für eine Werkzeugwechselvorrichtung in der DE 33 18 603 A1 beschrieben.

Als besonders funktionssicher hat sich erwiesen, daß der Kraftspeicher aus mindestens einer Druckfeder, insbesondere Tellerfeder, gebildet ist, die auf der einen Seite des Kulissensteins eingreift, wohingegen auf seiner anderen Seite das Betätigungsteil in Form einer Betätigungsschraube angreift.

Weitere vorteilhafte Ausgestaltungen der Ausrichteinrichtung sind Gegenstand der Unteransprüche.

Im folgenden wird eine Ausführungsform der erfindungsgemäßen Ausrichteinrichtung anhand der Zeichnung näher erläutert.
Es zeigen in prinzipieller und nicht maßstäblicher Darstellung die
- Fig. 1: einen Längsschnitt durch einen in einer Werkzeughalteraufnahme angeordneten Werkzeughalter in Form eines Winkelspindelkopfes;
- Fig. 2: einen Teilschnitt I - I nach der Schnittlinie I - I in Fig.1 und ansonsten eine Draufsicht auf den Winkelspindelkopf nach der Fig.1;
- Fig. 3: in vergrößerter Darstellung die in den Fig. 1 und 2 im Schnitt dargestellte Ausrichteinrichtung.

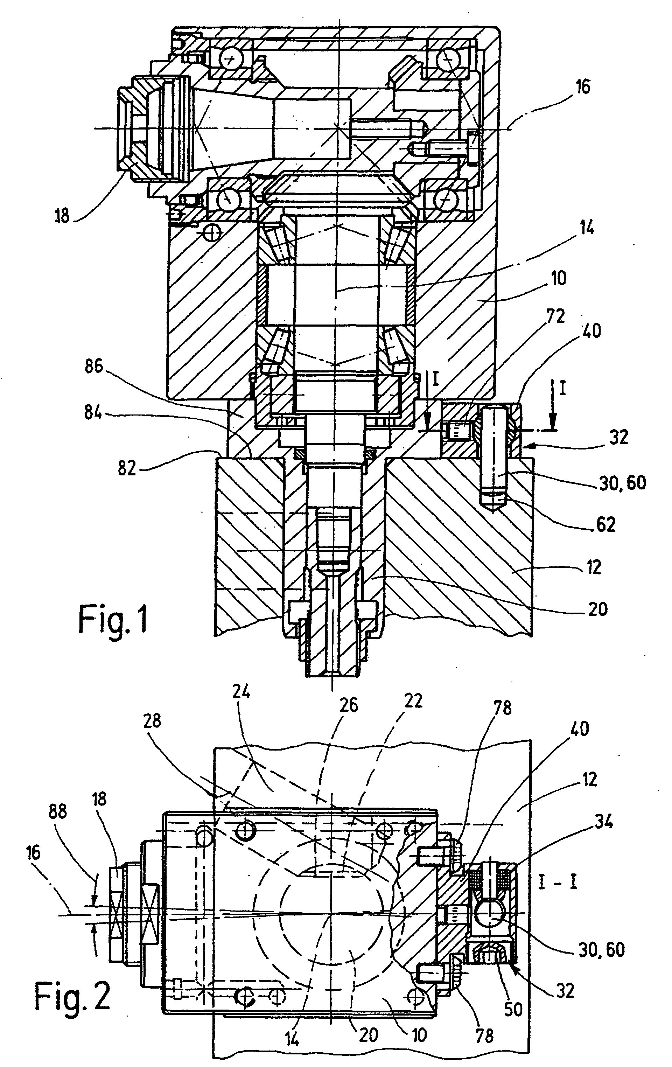

Die Ausrichteinrichtung dient der relativen Lageeinstellung eines Werkzeughalters 10 gegenüber einer Werkzeughalteraufnahme 12 bei Werkzeugmaschinen (nicht dargestellt), insbesondere Drehmaschinen. Bei dem Werkzeughalter 10 handelt es sich um einen sog. Winkelspindelkopf mit einer ersten Antriebsachse 14, die für den Antrieb eines nicht näher dargestellten Schneidwerkzeuges eine rechtwinklig zu ihr verlaufende zweite Antriebsachse 16 antreibt. Das angesprochene Schneidwerkzeug läßt sich in üblicher und daher nicht näher beschriebener Art und Weise über die Werkzeugaufnahme 18 einsetzen, die von den Antriebsachsen 14,16 für einen Bearbeitungsvorgang antreibbar ist. Die erste Antriebsachse 14 ist drehbar in einem Werkzeughalterschaft 20 geführt, der außenumfangsseitig in üblicher Art und Weise mit einer Verzahnung 22 versehen ist. Ist der Werkzeughalter 10 über seinen Werkzeughalterschaft 20 in die zugeordnete kreisförmige Aufnahme der Werkzeughalteraufnahme 12 eingesetzt, greift die korrespondierende Verzahnung eines Klemmstückes 24 gemäß einer Position nach der Fig.2 mit seiner korrespondierenden Verzahnung 26 in die Verzahnung 22 des Werkzeughalterschaftes 20 ein und legt somit den Winkelspindelkopf an der Werkzeughalteraufnahme 12 fest. Zum Lösen des Klemmstückes 24 wird dieses in seiner Längsachse 28 rückversetzt, wodurch die Verzahnungen 22,26 außer Eingriff miteinander geraten und der Werkzeughalter 10 ist freigegeben.

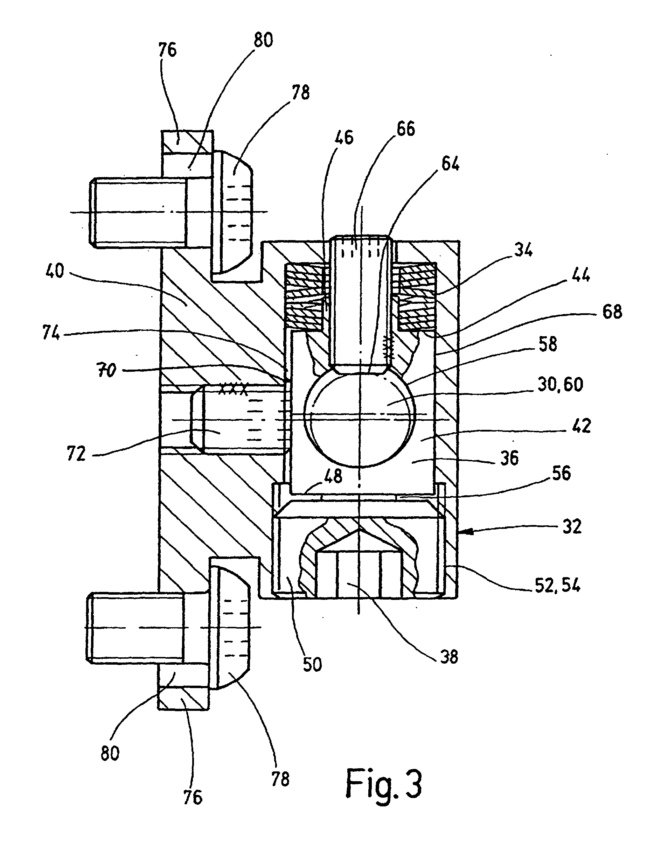

Bei einer Drehbearbeitung kann die erste Antriebsachse 14 entlang der sog. Z-Achse der Drehmaschine verlaufen und mithin steht die zweite Antriebsachse 16 hierzu in einem rechten Winkel. Beim Gegenspindeldrehen hingegen ist die Anordnung des Werkzeughalters 10 derart, daß die zweite Antriebsachse 16 parallel zur Z-Achse der Drehmaschine ausgerichtet ist und die erste Antriebsachse 14 verläuft hierzu in einer senkrechten Richtung quer zur Z-Achse. In beiden Fällen ist jedoch die Werkzeugspitze des Schneidwerkzeuges und mithin die zweite Antriebsachse 16 im Hinblick auf die angesprochene Z-Achse exakt auszurichten, um Bearbeitungsungenauigkeiten zu vermeiden. Hierfür ist vorgesehen, daß die Ausrichteinrichtung ein Ausrichtteil 30 aufweist, das mit einem als Ganzes mit 32 bezeichneten Einstellteil zusammenwirkt. Wie insbesondere die Fig.3 zeigt, weist das Einstellteil 32 ein entgegen der Wirkung eines Kraftspeichers 34 bewegbares Führungsteil 36 für das Ausrichtteil 30 auf, wobei das Führungsteil 36 über ein Betätigungsteil 38 ansteuerbar ist.

Wie insbesondere die Fig.1 1 zeigt, ist dabei das Ausrichtteil 30 fest an der Werkzeughalteraufnahme 12 und das Einstellteil 32 wiederum fest an dem Werkzeughalter 10 angeordnet. Das Einstellteil 32 ist mit einem Aufnahmegehäuse 40 versehen, in dem längsverschiebbar das Führungsteil 36 in Form eines Kulissensteins 42 geführt ist, der eine Eingriffsstelle für das Ausrichtteil 30 aufweist. Der Kraftspeicher 34 ist aus mindestens einer Tellerfeder oder hintereinander angeordneten Tellerfederpaketen gebildet. Diese greifen, wie dies insbesondere die Fig.3 zeigt, mit ihrem einen freien Ende an der einen Seite 44 des Kulissensteins 42 an und stützen sich mit ihrem anderen Ende auf der Innenseite des Aufnahmegehäuses 40 ab. Zur Bildung einer definierten Anlagefläche für den Kraftspeicher 34 in Form des Tellerfederpaketes weist der Kulissenstein 42 am zugeordneten Ende einen Absatz 46 auf, wobei die absatzartige Verlängerung von dem Tellerfederpaket zumindest teilweise umgriffen ist. Der Absatz 46 weist jedoch auf jeden Fall einen solchen Abstand vom Inneren des Aufnahmegehäuses 40 auf, daß der freie Federweg des Tellerfederpaketes nicht behindert ist. Im übrigen besteht über den Absatz 46 eine Anschlagmöglichkeit gegenüber dem Aufnahmegehäuse 40 bei Überbeanspruchung oder Versagen des Kraftspeichers 34.

Auf der anderen Seite 48 des Kulissensteins 42 greift das Betätigungsteil 38 in Form einer Betätigungsschraube 50 an, die mit einer Innensechskantausnehmung versehen ist für den Eingriff eines nicht näher dargestellten Betätigungswerkzeuges, beispielsweise in Form eines Innensechskantschlüssels. Die Betätigungsschraube 50 ist mit ihrem Außengewinde 52 in einem Innengewinde 54 des Aufnahmegehäuses 40 ein- und ausdrehbar geführt und stößt als separates Bauteil mit einem Anschlagteil 56 an der anderen Seite 48 des Kulissensteins 42 an, welcher unter der Einwirkung des Kraftspeichers 34 an das Anschlagteil 56 der Betätigungsschraube 50 gedrückt ist. Das Innengewinde 54, das mit seinem freien Ende in die Umgebung mündet, ist derart in einer Länge in das Aufnahmegehäuse 40 eingeschnitten, daß der vorgesehene gesamte Schwenkweg für die zweite Antriebsachse 16 und mithin für den Werkzeughalter 10 erreicht ist.

Der Kulissenstein 42 weist als Eingriffsstelle eine Mittenbohrung 58 auf, deren Durchmesser größer ist als der Durchmesser des Ausrichtteils 30 in Form eines Ausrichtzapfens 60, der, wie dies insbesondere die Fig.1 zeigt, paßgenau in eine Paßbohrung 62 in der Werkzeughalteraufnahme 12 aufgenommen ist. Innerhalb der Mittenbohrung 58 wiederum ist eine Anschlagfläche 64 für den Ausrichtzapfen 60 vorgesehen, wobei die dahingehende Anschlagfläche 64 Teil einer Anschlagschraube 66 ist, die das Tellerfederpaket mittig durchgreift und in den Kulissenstein 42 eingeschraubt ist. Das freie Ende der Anschlagschraube 66 ist lose in der Wandung des Aufnahmegehäuses 40 geführt und läßt sich im übrigen über eine übliche Loctite-Verbindung innerhalb des Innengewindes des Kulissensteins 42 sichern. Am freien Ende der Anschlagschraube 66 ist darüber hinaus eine Eingriffsstelle für ein Betätigungswerkzeug (nicht dargestellt) vorhanden, mit dem sich die Anschlagschraube 66 innerhalb des Kulissensteins 42 anziehen läßt, um so den freien Raum innerhalb der Mittenbohrung 58 des Kulissensteins 42 zu verringern.

Damit sich bei einem dahingehenden Einstellvorgang der Kulissenstein 42 nicht innerhalb seiner Führung 68 im Aufnahmegehäuse 40 verdrehen kann, ist eine Verdrehsicherung 70 (vgl. Fig.3) vorgesehen. Die Verdrehsicherung 70 weist eine sog. Madenschraube 72 auf, die in das Aufnahmegehäuse 40 eindrehbar mit ihrem einen freien Stirnende in eine Längsnut 74 des Kulissensteins 42 eingreift. Hierdurch ist zum einen eine wirksame Verdrehsicherung 70 gegeben und zum anderen die Längsverfahrbarkeit des Aufnahmegehäuses 40 gegenüber dem Kulissenstein 42 nach wie vor gewährleistet. Auch die Madenschraube 72 läßt sich über eine übliche Loctite-Verbindung innerhalb des Aufnahmegehäuses 40 dauerhaft festlegen. Das Aufnahmegehäuse 40 weist im Bereich des Eingriffes der Madenschraube 72 zu beiden Seiten hin eine flanschartige Verlängerung 76 auf, die jeweils von einer Festlegeschraube 78 durchgriffen sind, die dem späteren Festlegen des Einstellteils 32 am Werkzeughalter 10 (vgl. Fig.2) dienen. Um für dieses Festlegen einen gewissen Toleranzausgleich erreichen zu können, ist vorgesehen, daß die Festlegeschrauben 78 jeweils in vergrößerte Bohrungen 80 innerhalb der flanschartigen Verlängerungen 76 eingreifen. Mithin läßt sich der Abstand zwischen den Festlegeschrauben 78 derart variieren.

Wie des weiteren die Fig.1 zeigt, steht das Ausrichtteil 30 lagezentriert über die eigentliche Auflagefläche 82 der Werkzeughalteraufnahme 12 vor und ist von dem Einstellteil 32 in Verlängerung der Anlagefläche 84 des Werkzeughalters 10 für einen Eingriff übergreifbar. Die Auflagefläche 82 und die Anlagefläche 84 sind derart gearbeitet, daß eine exakte planparallele Anlage von Werkzeughalter 10 an der Werkzeughalteraufnahme 12 gegeben ist. Des weiteren greift das Einstellteil 32 an einem vorspringenden Absatz 86 des Werkzeughalters 10 seitlich an, wobei der Absatz 86 eine Höhe aufweist, die geringfügig größer ist als die Bauhöhe des Einstellteils 32 in Richtung des Ausrichtteils 30 gesehen.

Zur Verdeutlichung der erfindungsgemäßen Ausrichteinrichtung wird diese nunmehr im folgenden anhand eines praktischen Einstellvorganges näher erläutert. Zunächst wird mit der Anschlagschraube 66 zur Durchmessereinstellung die Mittenbohrung 58 des Kulissensteins 42 auf den Durchmesser des Ausrichtzapfens 60 eingestellt. Danach wird das Aufnahmegehäuse 40 am Werkzeughalter 10, insbesondere an seinem vorspringenden Absatz 86, über die Festlegeschraube 78 festgelegt. Da der Durchmesser des stiftartigen Ausrichtzapfens 60 sehr eng toleriert ist, erfolgt die dahingehende Grundeinstellung vorzugsweise einmalig beim Werkzeughersteller. Im späteren Betrieb vor Ort kann dann die dahingehende Grundeinstellung gegebenenfalls bei Verschleißerscheinungen des Ausrichtzapfens 60 oder bei Änderung der Winkeleinstellung erneut korrigiert werden.

Der Werkzeughalter 10 wird dann in die Aufnahmeöffnung der Werkzeughalteraufnahme 12 beispielsweise einer Voreinstellehre eingesetzt und mit ca. 10 bis 25 % der maximalen Klemmkraft über das Klemmstück 24 gespannt. Es ist aber auch möglich, die Einstellung an der Maschine mittelbar vorzunehmen. Anschließend werden der Werkzeughalter 10 und mithin die beiden Antriebsachsen 14,16 in ihrer Winkellage eingestellt, indem mit der Betätigungsschraube 50 der Kulissenstein 42 gegen die Kraft der Tellerfederpakete (Kraftspeicher 34) verschoben wird. Dadurch kann sich der Werkzeughalter 10 zunächst um die erste Antriebsachse 14 drehen und derart die zweite Antriebsachse 16 in einer Schwenkrichtung mitnehmen, die in Blickrichtung auf die Fig.1 gesehen senkrecht auf der Zeichenebene steht. In der Fig.2 ist die dahingehende Auslenkmöglichkeit der zweiten Antriebsachse 16 in beiden Richtungen um ihre Mittellage durch aufeinander zugewandte Pfeile 88 angedeutet.

Die Kraft des Federpaketes ist dabei vorzugsweise derart bemessen, daß sie auf jeden Fall größer ist als die auf die Winkeleinstellung wirkenden Bearbeitungskräfte des Schneidwerkzeuges des Werkzeughalters 10. Dem Grunde nach verbleibt also der Kulissenstein 42 in seiner festgelegten Position auf dem Ausrichtzapfen 60 und bei Betätigen der Betätigungsschraube 50 bewegen sich das Aufnahmegehäuse 40 und mithin der vorspringende Absatz 86 sowie der Werkzeughalter 10 um eine vorgebbare Wegstrecke um die erste Antriebsachse 14. Wird dabei die Betätigungsschraube 50 im Uhrzeigersinn angezogen, verschwenkt die zweite Antriebsachse 16 ebenfalls im Uhrzeigersinn und umgekehrt, so daß die Bedienperson eine sinnfällige Betätigung für die Winkeleinstellung vorfindet.

## Patentansprüche

1. Ausrichteinrichtung für die relative Lageeinstellung eines Werkzeughalters (10) gegenüber einer Werkzeughalteraufnahme (12) bei Werkzeugmaschinen in Form einer Schwenkbewegung mit einem Ausrichtteil (30), das mit einem Einstellteil (32) zusammenwirkt, **dadurch gekennzeichnet, daß** das Einstellteil (32) mit einem Aufnahmegehäuse (40) versehen ist, in dem entgegen der Wirkung eines Kraftspeichers (34) längsverschiebbar ein Führungsteil (36) für das Ausrichtteil (30) geführt ist und daß das Führungsteil (36) über ein Betätigungsteil (38) ansteuerbar ist.

2. Ausrichteinrichtung nach Anspruch 1, **dadurch gekennzeichnet, daß** das Ausrichtteil (30) fest an der Werkzeughalteraufnahme (12) und das Einstellteil (32) fest an dem Werkzeughalter (10) angeordnet sind.

3. Ausrichteinrichtung nach Anspruch 1 oder 2, **dadurch gekennzeichnet, daß** das Führungsteil (36) in Form eines Kulissensteins (42) ausgebildet ist, der eine Eingriffsstelle für das Ausrichtteil (30) aufweist.

4. Ausrichteinrichtung nach Anspruch 3, **dadurch gekennzeichnet, daß** der Kraftspeicher (34) aus mindestens einer Druckfeder, insbesondere Tellerfeder, gebildet ist, die an der einen Seite (44) des Kulissensteins (42) angreift und daß auf seiner anderen Seite (48) das Betätigungsteil (38) in Form einer Betätigungsschraube (50) angreift.

5. Ausrichteinrichtung nach Anspruch 3 oder 4, **dadurch gekennzeichnet, daß** der Kulissenstein (42) als Eingriffsstelle eine Mittenbohrung (58) aufweist, deren Durchmesser größer ist als der Durchmesser des Ausrichtteils (30) in Form eines Ausrichtzapfens (60).

6. Ausrichteinrichtung nach Anspruch 5, **dadurch gekennzeichnet, daß** innerhalb der Mittenbohrung (58) des Kulissensteins (42) eine Anschlagfläche (64) für den Ausrichtzapfen (60) angeordnet ist.

7. Ausrichteinrichtung nach Anspruch 6, **dadurch gekennzeichnet, daß** die Anschlagfläche (64) Teil einer Anschlagschraube (66) ist, die die Druckfeder und Teile des Kulissensteins (42) durchgreift.

8. Ausrichteinrichtung nach einem der Ansprüche 3 bis 7, **dadurch gekennzeichnet, daß** für den Kulissenstein (42) innerhalb seiner Führung im Aufnahmegehäuse (40) eine Verdrehsicherung (70) vorgesehen ist.

9. Ausrichteinrichtung nach einem der Ansprüche 2 bis 8, **dadurch gekennzeichnet, daß** das Ausrichtteil (30) lagezentriert über die Auflagefläche (82) der Werkzeughalteraufnahme (12) vorsteht und von dem Einstellteil (32) in Verlängerung der Anlagefläche (84) des Werkzeughalters (10) übergreifbar ist.

10. Ausrichteinrichtung nach einem der Ansprüche 1 bis 9, **dadurch gekennzeichnet, daß** der Werkzeughalter (10) ein Winkel-Spindelkopf ist, der lösbar über ein Klemmstück (24) an der Werkzeughalteraufnahme (12) festlegbar ist.

## Claims

1. Alignment device for setting a tool holder (10) in a relative position in relation to tool holder support (12) on machine tools, in the form of a swivelling motion performed by an alignment part (30) cooperating with a setting part (32), **characterised in that** the setting part (32) is provided with a support housing (40) in which a guide part (36) for the alignment part (30) is guided against the action of a power accumulator (34) and that the guide part (36) is controllable via an actuating part (38).

2. Alignment device according to claim 1, **characterised in that** the alignment part (30) is firmly arranged at the tool holder support (12) and the setting part (32) at the tool holder (10).

3. Alignment device according to claim 1 or 2, **characterised in that** the guide part (36) is designed in the form of a sliding block (42) which has an engagement point for the alignment part (30).

4. Alignment device according to claim 3, **characterised in that** the power accumulator (34) is formed by at least one thrust spring, in particular a cup spring engaging on one side (44) of the sliding block (42) and that the actuating part (38) in the form of an actuating screw (50) engages on its other side (48).

5. Alignment device according to claim 3 or 4, **characterised in that** the sliding block (42) has a centre bore (58) as the engagement point, the diameter of which is greater than the diameter of the alignment part (30) in the form of an alignment pin (60).

6. Alignment device according to claim 5, **characterised in that** a stop face (64) for the alignment pin (60) is arranged within the centre bore (58) of the sliding block (42).

7. Alignment device according to claim 6, **characterised in that** the stop face (64) is part of the stop screw (66) which passes through the thrust spring and parts of the sliding block (42).

8. Alignment device according to one of the claims 3 to 7, **characterised in that** a torsional lock (70) is provided for the sliding block (42) within its guide in the support housing (40).

9. Alignment device according to one of the claims 2 to 8, **characterised in that** the alignment part (30) protrudes, centred in position, above the supporting face (82) of the tool holder support (12) and can be overlapped by the setting part (32) as an extension of the supporting face (84) of the tool holder (10).

10. Alignment device according to one of the claims 1 to 9, **characterised in that** the tool holder (10) is an angle spindle head which is detachably fixed at the tool holder support (12) by a clamp (24).

## Revendications

1. Dispositif d'alignement pour le positionnement relatif d'un porte-outil (10) par rapport à un logement de porte-outil (12) dans des machines-outils sous forme d'un mouvement pivotant avec une pièce d'alignement (30) qui coopère avec une pièce de réglage (32), **caractérisé en ce que** la pièce de réglage (32) est munie d'un boîtier de logement (40) dans lequel une pièce de guidage (36) pour la pièce d'alignement (30) est guidée de manière déplaçable dans le sens longitudinal contre l'effet d'un accumulateur d'énergie (34) et **en ce que** la pièce de guidage (36) peut être commandée par une pièce de manoeuvre (38).

2. Dispositif d'alignement selon la revendication 1, **caractérisé en ce que** la pièce d'alignement (30) est disposée fixement sur le logement de porte-outil (12) et la pièce de réglage (32) est disposée fixement sur le porte-outil (10).

3. Dispositif d'alignement selon la revendication 1 ou 2, **caractérisé en ce que** la pièce de guidage (36) est conçue sous forme d'un coulisseau (42) qui présente un point d'engagement pour la pièce d'alignement (30).

4. Dispositif d'alignement selon la revendication 3, **caractérisé en ce que** l'accumulateur d'énergie (34) est constitué d'au moins un ressort de pression, en particulier d'un ressort à disques, qui s'engage sur l'un des côtés (44) du coulisseau (42) et **en ce que** la pièce de manoeuvre (38) s'engage, sur l'autre côté (48), sous forme d'une vis de manoeuvre (50).

5. Dispositif d'alignement selon la revendication 3 ou 4, **caractérisé en ce que** le coulisseau (42) comporte comme point d'engagement un alésage central (58) dont le diamètre est plus grand que le diamètre de la pièce d'alignement (30) sous forme d'un tourillon d'alignement (60).

6. Dispositif d'alignement selon la revendication 5, **caractérisé en ce qu'**une surface d'arrêt (64) est disposée à l'intérieur de l'alésage central (58) du coulisseau (42) pour le tourillon d'alignement (60).

7. Dispositif d'alignement selon la revendication 6, **caractérisé en ce que** la surface d'arrêt (64) fait partie d'une vis d'arrêt (66) qui pénètre dans le ressort de pression et les parties du coulisseau (42).

8. Dispositif d'alignement selon l'une des revendications 3 à 7, **caractérisé en ce qu'**un dispositif anti-torsion (70) est prévu pour le coulisseau (42) à l'intérieur de sa glissière de guidage dans le boîtier de logement (40).

9. Dispositif d'alignement selon l'une des revendications 2 à 8, **caractérisé en ce que** la pièce d'alignement (30) fait saillie en position centrée au-dessus de la surface d'appui (82) du logement de porte-outil (12) et **en ce que** la pièce de réglage (32) peut empiéter sur elle dans le prolongement de la surface d'appui (84) du porte-outil (10).

10. Dispositif d'alignement selon l'une des revendications 1 à 9, **caractérisé en ce que** le porte-outil (10) est un nez de broche angulaire qui peut être fixé de manière détachable sur le logement de porte-outil (12) à l'aide d'une pièce de serrage (24).
